# EUROPEAN PATENT APPLICATION

(11) **EP 2 881 921 A1**
(43) Date of publication of application: **10.06.2015**
(21) Application number: 14195647.4
(22) Date of filing: 01.12.2014
(51) Int. Cl.: G08B 25/01, B60K 28/14

(54) **Vehicle accident notification apparatus**

(30) Priority: 06.12.2013 JP 2013253279
(71) Applicant: Alps Electric Co., Ltd., Tokyo 145-8501 (JP)
(72) Inventor: Iwabuchi, Takehiro, Tokyo, Tokyo 145-8501 (JP)
(74) Representative: Klunker . Schmitt-Nilson . Hirsch

(57) **Abstract**

A vehicle accident notification apparatus (100) includes a vehicle-mounted wireless communication unit (200) disposed on a motorcycle, a first microcomputer (10), which controls devices mounted on the motorcycle, and a mobile wireless communication unit (300) carried by a rider. Wireless communication is carried out between the vehicle-mounted wireless communication unit (200) and the mobile wireless communication unit (300). If they are separated from each other by a predetermined distance (wireless communication range) or longer, the wireless communication is disabled. If the wireless communication is disabled for a predetermined time or longer and measured values from a speedmeter mounted on the motorcycle fall abruptly to or below a predetermined value for a predetermined time or longer, the first microcomputer (10) determines that the motorcycle has had an accident and causes the motorcycle to automatically drive its headlight, horn, and directional indicators to raise alarms.

## Description

The present invention relates to a vehicle accident notification apparatus, and more particularly to a vehicle accident notification apparatus mounted on a motorcycle.

A recent vehicle accident notification apparatus that has been mounted on a vehicle or the like determines that the vehicle has had an accident when the vehicle accident notification apparatus detects a shock applied to the vehicle and then turns on, for example, its directional indicators and horn to notify vehicles in the vicinity of the accident and the like of the accident.

A vehicle accident notification apparatus mounted on a motorcycle enables an alarm to be automatically raised from a vehicle that has had an accident, so the vehicle accident notification apparatus can prevent a secondary accident and can notify people in the vicinity of the accident, so rapid relief can be requested.

A vehicle accident notification apparatus described in JP 11-147441 A is known.

The vehicle accident notification apparatus described in JP 11-147441 A will be described below with reference to Fig. 8. Fig. 8 is a block diagram illustrating the structure of the vehicle accident notification apparatus described in JP 11-147441 A.

An accident indicating switch body 910 includes a power switch 920, a blinking relay 930, a live wire 970, a main switch connection wire 960, and a battery connection wire 980. The power switch 920 is connected to sensors through sensor connection wires 940. The blinking relay 930 is connected to alarm indicating devices through alarm indicating device connection wires 950.

The accident indicating switch body 910, which is disposed near a position below an air bag attachment position, is connected from the terminals of a switch to the bumper and doors of the vehicle, shock detecting sensors being attached to the bumper and doors, and to an air bag sensor and the like through the sensor connection wires 940. If a shock detecting sensor detects a shock generated in an accident, the accident indicating switch body 910 is automatically turned on, enabling a room lamp, directional indicators, back lights, a horn, and the like to be turned on.

However, when the vehicle accident notification apparatus in the prior art is mounted on, for example, a motorcycle, even if the motorcycle has an accident, it may not cause a shock detectable by a shock detecting sensor. If, for example, the motorcycle falls on its side as a result of leaning too far over while travelling around a corner, the body of the motorcycle does not generate a shock as in a frontal impact, in which case the accident indicating switch body 910 is not turned on. However, even in an accident of a motorcycle or the like in which a generated shock is not detectable by the shock detecting sensor, the rider may be thrown from the motorcycle and may be unconscious or injured at the time of falling, and therefore the rider often be unable to move immediately. This has been problematic in that a following vehicle or an oncoming vehicle may collide with the motorcycle that has had the accident, or a secondary accident may occur.

To address the above problem, the present invention provides a vehicle accident notification apparatus that can accurately determine that a motorcycle has had an accident even if the accident is not detectable by a shock detecting sensor and can thereby reduce the likelihood of a secondary accident in which, for example, a following vehicle or an oncoming vehicle would otherwise collide with the motorcycle that has had the accident.

To solve the above problem, the vehicle accident notification apparatus according to Claim 1 includes a vehicle-mounted wireless communication unit disposed on a motorcycle, a control unit that controls devices mounted on the motorcycle, and a mobile wireless communication unit carried by a rider; wireless communication is carried out between the vehicle-mounted wireless communication unit and the mobile wireless communication unit, but if the vehicle-mounted wireless communication unit and mobile wireless communication unit are separated from each other by a predetermined distance (wireless communication range) or longer, the wireless communication is disabled; if the wireless communication between the vehicle-mounted wireless communication unit and the mobile wireless communication unit is disabled for a predetermined time or longer and measured values from a speedmeter mounted on the motorcycle fall from within a reference range to or below a predetermined value for a predetermined time or longer, the control unit determines that the motorcycle has had an accident and causes the motorcycle to automatically drive its notification functions.

With the vehicle accident notification apparatus according to Claim 2, measured values from a leaning sensor that measures a leaning of the motorcycle to the right and left are input into the control unit; if the measured values from the leaning sensor change from within a reference range to within a fall detection range for a predetermined time or longer, the control unit determines that the motorcycle has fallen over and causes the motorcycle to automatically drive the notification functions.

With the vehicle accident notification apparatus according to Claim 3, an ignition switch is mounted on the motorcycle; when the ignition switch is turned on while the wireless communication between the vehicle-mounted wireless communication unit and the mobile wireless communication unit is established, the motorcycle starts its engine; the motorcycle has a detecting unit that detects whether the ignition switch is turned on or off; if a detection result from the detecting unit indicates an on state, the control unit turns on the notification functions; if the detection result from the detecting unit indicates an off state, the control unit turns off the notification functions.

According to the invention in Claim 1, if the wireless communication between the vehicle-mounted wireless communication unit and the mobile wireless communication unit carried by the rider is disabled for a predetermined time or longer, it can be determined that the rider and motorcycle are separated from each other by a predetermined distance or longer. If measured values from the speedmeter mounted on the motorcycle also fall abruptly from within a reference range to or below a predetermined value for a predetermined time or longer, it can be determined that the rider cannot drive the motorcycle and thereby cannot run it. Accordingly, the control unit can accurately determine that the motorcycle has had an accident. Accordingly, a vehicle accident notification apparatus can be provided that reduces the likelihood of a secondary accident, such as a collision of a following vehicle or an oncoming vehicle with the motorcycle that has had the accident.

According to the invention in Claim 2, in a case in which values from the leaning sensor that measures a leaning of the motorcycle to the right and left change abruptly from within a reference range to within a fall detection range for a predetermined time or longer, a motorcycle often falls during running; therefore, if a determination as to whether this case is true is added to conditions under which a determination is made as to whether a motorcycle has had an accident, the control unit can more accurately determine that an accident has occurred.

According to the invention in Claim 3, in a case in which wireless communication is established between the vehicle-mounted wireless communication unit and the mobile wireless communication unit and the ignition switch of the motorcycle is turned on, the engine is operating. Therefore, if a determination as to whether this case is true is added to conditions under which a determination is made as to whether a motorcycle has had an accident, the control unit can more accurately determine that an accident has occurred.

As described above, the present invention can accurately determine that a motorcycle has had an accident, so it can provide a vehicle accident notification apparatus that reduces the likelihood of a secondary accident, such as a collision of a following vehicle or an oncoming vehicle with the motorcycle that has had the accident by automatically raising alarms from the motorcycle.

### BRIEF DESCRIPTION OF THE DRAWINGS

Fig. 1 is a block diagram illustrating the structure of a vehicle accident notification apparatus according to a first embodiment of the present invention;
Fig. 2 is a block diagram illustrating the structure of a system of devices mounted on a motorcycle and the vehicle accident notification apparatus according to the first embodiment of the present invention;
Fig. 3 is a block diagram illustrating the structure of a vehicle-mounted wireless communication unit according the first embodiment of the present invention;
Fig. 4 is a block diagram illustrating the structure of a mobile wireless communication unit according the first embodiment of the present invention;
Fig. 5 is a flowchart illustrating the operation of the vehicle accident notification apparatus according the first embodiment of the present invention;
Fig. 6 illustrates a range in low-frequency (LF) communication and a range in radio-frequency (RF) communication according the first embodiment of the present invention;
Fig. 7 illustrates a situation in which a motorcycle according to the first embodiment of the present invention has an accident and falls; and

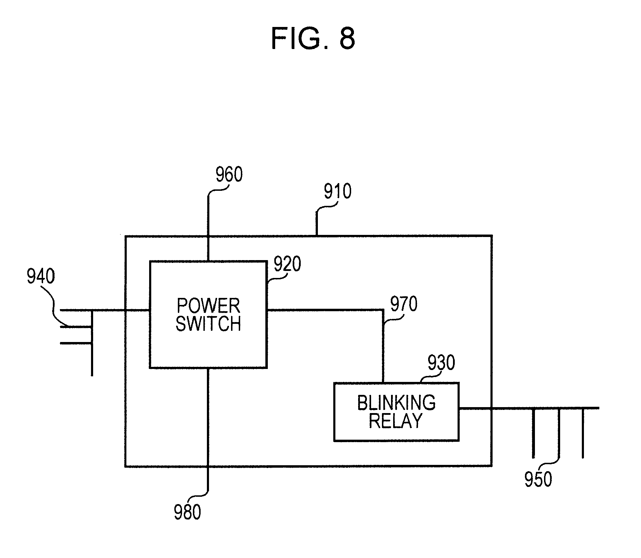

Fig. 8 is a block diagram illustrating the structure of a vehicle accident notification apparatus in a first conventional example.

### DESCRIPTION OF EMBODIMENTS

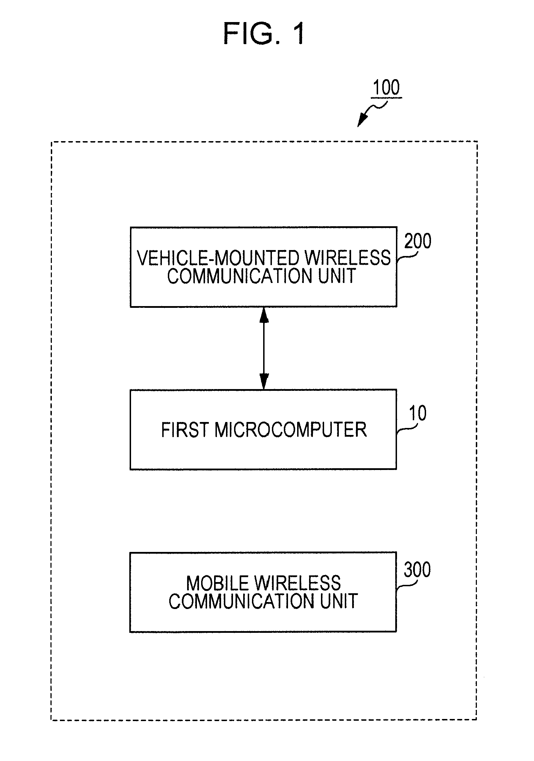

A vehicle accident notification apparatus 100 in a first embodiment of the present invention will be described below with reference to Figs. 1 to 7.

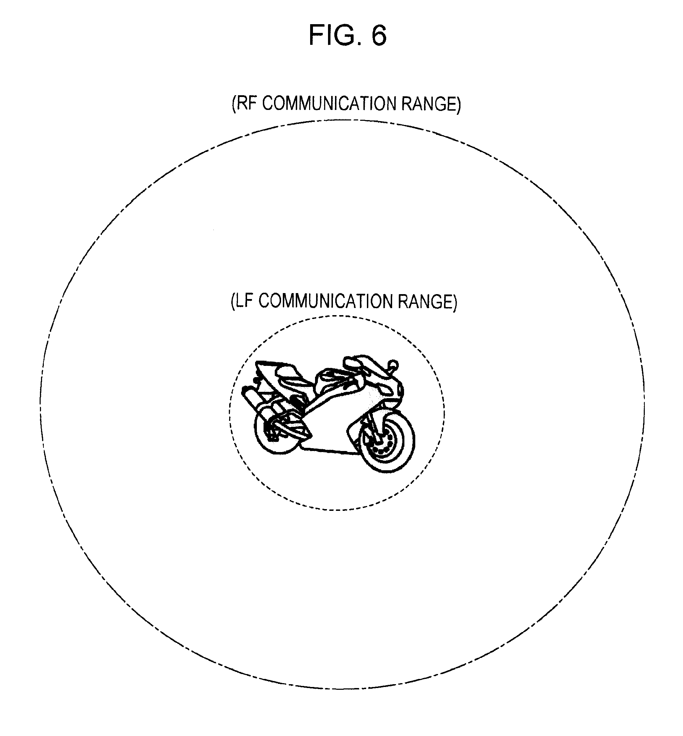

The structure of the vehicle accident notification apparatus 100 in the first embodiment will be described below with reference to Figs. 1 and 6. Fig. 1 is a block diagram illustrating the structure of the vehicle accident notification apparatus 100 according to the first embodiment of the present invention. Fig. 6 illustrates a range in low-frequency (LF) communication and a range in radio-frequency (RF) communication according to the first embodiment of the present invention.

As illustrated in Fig. 1, the vehicle accident notification apparatus 100 includes a vehicle-mounted wireless communication unit 200, a first microcomputer 10, which functions as a control unit for devices mounted on a motorcycle, and a mobile wireless communication unit 300 carried by a rider. The first microcomputer 10 is connected to the vehicle-mounted wireless communication unit 200.

A function substantially equivalent to a smart keyless entry system, which is used in a typical automobile, is provided between the vehicle-mounted wireless communication unit 200 and the mobile wireless communication unit 300. The function will be described simply below.

When the rider carrying the mobile wireless communication unit 300 comes close to the motorcycle, an LF communication range is created. The vehicle-mounted wireless communication unit 200 sends an inquiry signal, which includes an identification (ID) code, at fixed time intervals by LF transmission. Next, the mobile wireless communication unit 300 receives the inquiry signal, extracts the ID code, and determines whether the ID code matches. If the ID code matches, the mobile wireless communication unit 300 sends a response signal including the ID code by RF transmission.

The vehicle-mounted wireless communication unit 200 then receives the response signal, extracts the ID code, and determines whether the ID code matches. If the ID code matches, the vehicle-mounted wireless communication unit 200 can start the engine of the motorcycle. When an ignition switch 53 is turned on, the engine starts. That is, the mobile wireless communication unit 300 functions as an electronic key instead of a mechanical key for the motorcycle.

The LF communication range is limited to the periphery of the motorcycle, so the wireless communication range is narrow, as illustrated in Fig. 6. However, the RF communication range is wide. If the vehicle-mounted wireless communication unit 200 and the mobile wireless communication unit 300 are within the wireless communication range, wireless communication between them is carried out at fixed time intervals even while the motorcycle is running. Accordingly, it is possible to determine whether the rider is present in the vicinity of the motorcycle (within the wireless communication range).

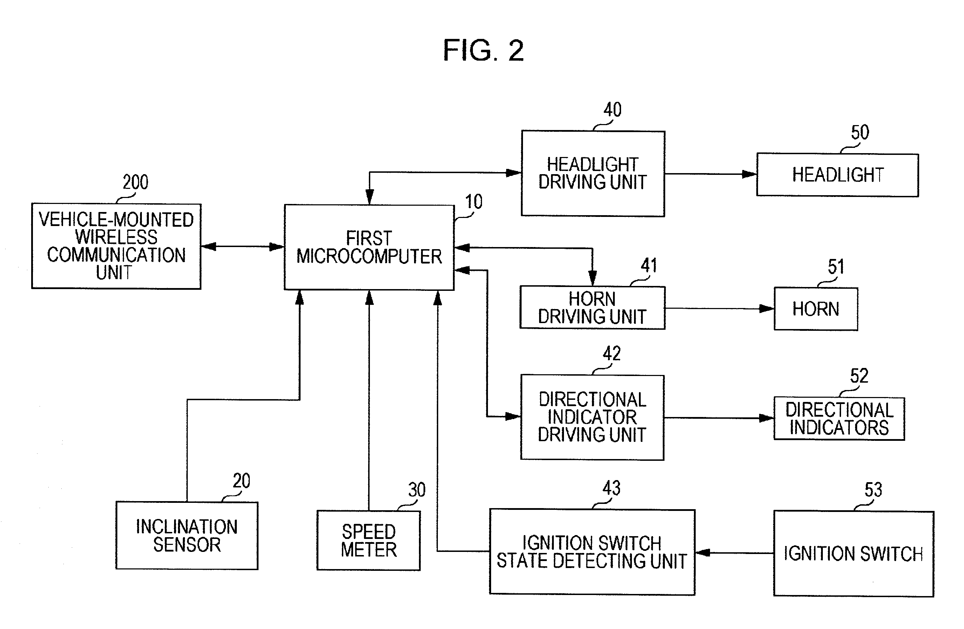

Next, the structure of a system of devices mounted on the motorcycle and the vehicle accident notification apparatus 100 according to the first embodiment will be described with reference to Fig. 2. The drawing is a block diagram illustrating the structure of the system of devices mounted on the motorcycle and the vehicle accident notification apparatus 100 according to the first embodiment of the present invention.

The first microcomputer 10, which performs control according to a prestored program, is connected to the vehicle-mounted wireless communication unit 200, a leaning sensor 20, a speedmeter 30, and an ignition switch state detecting unit 43, as illustrated in Fig. 2. The first microcomputer 10 controls the vehicle-mounted wireless communication unit 200.

The first microcomputer 10 is also connected to a headlight driving unit 40, a horn driving unit 41, and directional indicator driving unit 42 to control them.

The headlight driving unit 40 is connected to a headlight 50, which provides a notification function, and drives it. The horn driving unit 41 is connected to a horn 51, which provides a notification function, and drives it. The directional indicator driving unit 42 is connected to directional indicators 52, which provides a notification function, and drives them.

The speedmeter 30 usually obtains a speed value from the angular speed of the rear wheel of the motorcycle. In Japan, a speedmeter must be mounted on a motorcycle with a capacity of more than 125 cc. Values measured by the speedmeter 30 are sent to the first microcomputer 10.

The leaning sensor 20 measures an angle through which the motorcycle is leaning to the right or left with respect to its running direction. Therefore, the leaning sensor 20 is mounted at a place at which it can appropriately measure leaning angles on the right side and left side. The leaning sensor 20 is mounted on the motorcycle to call the rider's attention with the horn 51 or the like when a measured value falls within a caution range (for example, a range from -30 degrees to +30 degrees to a range from -50 degrees to +50 degrees) while, for example, the motorcycle is turning a sharp corner. Values measured by the leaning sensor 20 are sent to the first microcomputer 10.

The ignition switch state detecting unit 43 is mounted on the motorcycle to detect whether the ignition switch 53 has been turned on or off. Results of detection by the ignition switch state detecting unit 43 are sent to the first microcomputer 10.

The first microcomputer 10 monitors a situation of wireless communication between the vehicle-mounted wireless communication unit 200 and the mobile wireless communication unit 300, which will be described later, by receiving control signals from the vehicle-mounted wireless communication unit 200.

Using control signals received from the vehicle-mounted wireless communication unit 200, ignition switch state detecting unit 43, leaning sensor 20, and speedmeter 30, the first microcomputer 10 determines whether the motorcycle has had an accident.

If the first microcomputer 10 determines that the motorcycle has had an accident, the first microcomputer 10 controls the directional indicator driving unit 42 to drive the directional indicators 52 and raise an alarm. The first microcomputer 10 then controls the headlight driving unit 40 and horn driving unit 41 after the elapse of a predetermined time to drive the headlight 50 and horn 51 and raise alarms.

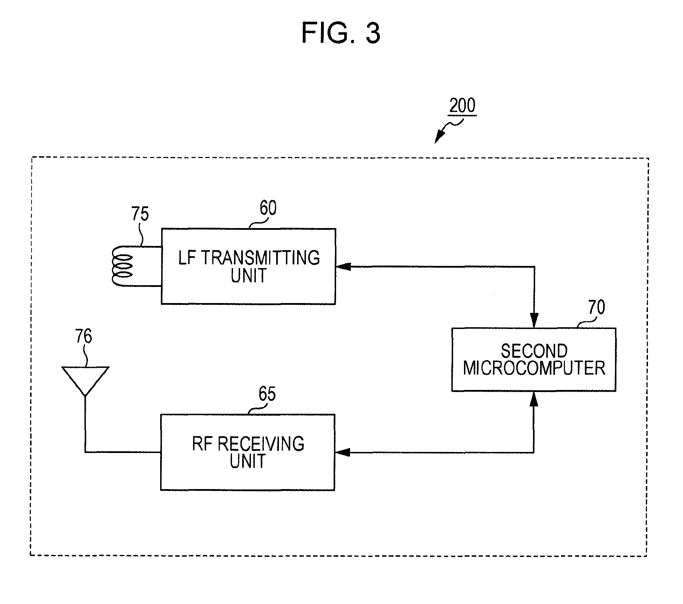

Now, the vehicle-mounted wireless communication unit 200 will be described with reference to Fig. 3. Fig. 3 is a block diagram illustrating the structure of the vehicle-mounted wireless communication unit 200.

As illustrated in Fig. 3, the vehicle-mounted wireless communication unit 200 includes an LF transmitting unit 60, an RF receiving unit 65, a second microcomputer 70, a first LF antenna 75, and a first RF antenna 76.

The second microcomputer 70, which performs control according to a prestored program, is connected to the LF transmitting unit 60 and RF receiving unit 65 to control them. A storage unit (not illustrated) in the second microcomputer 70 prestores an ID code, which is used for matching to start wireless communication with the mobile wireless communication unit 300, which will be described later.

The second microcomputer 70 is also connected to the first microcomputer 10 through an interface (not illustrated).

The LF transmitting unit 60, connected to the first LF antenna 75, transmits data (inquiry signal and ID code) to the mobile wireless communication unit 300 by LF transmission.

The RF receiving unit 65, connected to the first RF antenna 76, receives data (response signal and ID code) from the mobile wireless communication unit 300 by RF reception.

Therefore, the vehicle-mounted wireless communication unit 200 transmits data to the mobile wireless communication unit 300 by LF communication and receives data from the mobile wireless communication unit 300 by RF communication.

LF communication is a wireless communication method in which 125-kHz frequencies are used to transmit and receive data by amplitude modulation and demodulation. RF communication is a wireless communication method in which 315-MHz frequencies are used in the USA, 314.85-MHz frequencies are used in Japan, and 433.92-MHz frequencies are used in the EU to transmit and receive data by amplitude or frequency modulation and demodulation. These wireless communication methods are already practically used in automobiles.

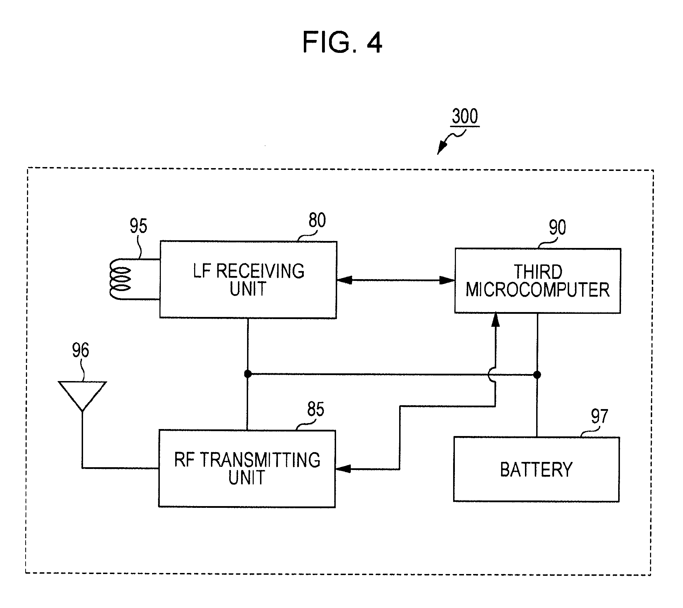

The mobile wireless communication unit 300 will be described with reference to Fig. 4. Fig. 4 is a block diagram illustrating the structure of the mobile wireless communication unit 300.

As illustrated in Fig. 4, the mobile wireless communication unit 300 includes an LF receiving unit 80, an RF transmitting unit 85, a third microcomputer 90, a second LF antenna 95, a second RF antenna 96, and a battery 97.

The third microcomputer 90, which performs control according to a prestored program, is connected to the LF receiving unit 80 and RF transmitting unit 85 to control them. A storage unit (not illustrated) in the third microcomputer 90 prestores an ID code, which is used for matching to start wireless communication with the vehicle-mounted wireless communication unit 200.

The battery 97 is connected to the LF receiving unit 80, RF transmitting unit 85, and third microcomputer 90 to supply electric power to them.

The LF receiving unit 80, which is connected to the second LF antenna 95, receives data (inquiry signal and ID code) to be sent by LF transmission from the LF transmitting unit 60 in the vehicle-mounted wireless communication unit 200.

The RF transmitting unit 85, which is connected to the second RF antenna 96, sends data (response signal and ID code) to the RF receiving unit 65 in the vehicle-mounted wireless communication unit 200 by RF transmission.

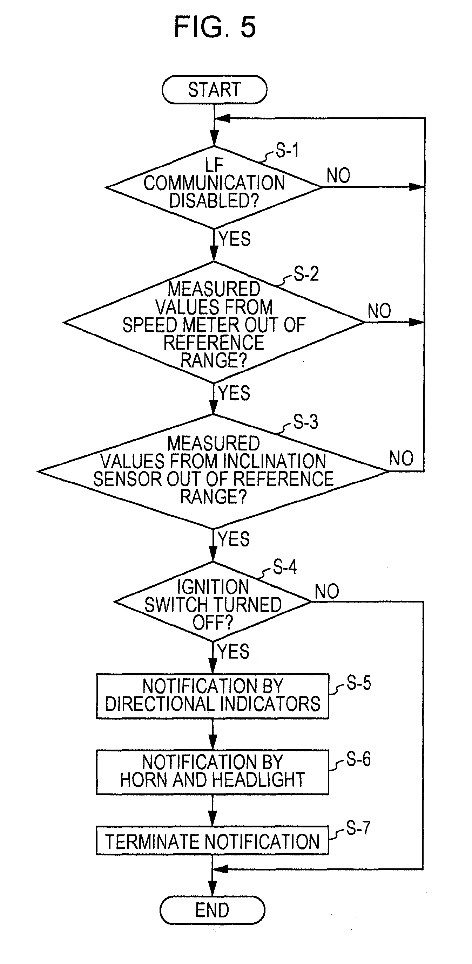

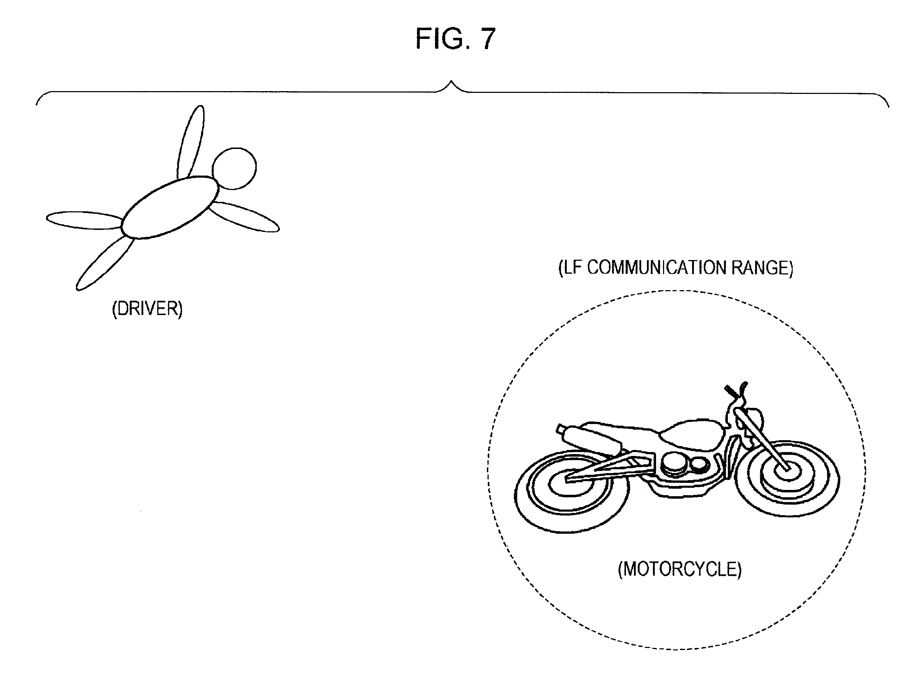

Now, the operation of the vehicle accident notification apparatus 100 will be described with reference to Figs. 5 and 7 for a case in which alarms are raised. Fig. 5 is a flowchart illustrating the operation of the vehicle accident notification apparatus 100 according the first embodiment, in which step S-m (m: natural number) indicates processing executed by the first microcomputer 10. The flowchart illustrates a case in which the motorcycle according to the first embodiment of the present invention has an accident and falls over.

In step S-1, wireless communication is carried out at 100-millisecond intervals between the vehicle-mounted wireless communication unit 200 in the vehicle accident notification apparatus 100 and the mobile wireless communication unit 300 carried by the rider while the motorcycle is running. The LF transmitting unit 60 in the vehicle-mounted wireless communication unit 200 transmits an inquiry signal and an ID code to the LF receiving unit 80 in the mobile wireless communication unit 300 by LF transmission.

Next, the LF receiving unit 80 receives the inquiry signal and ID code by LF reception, and the third microcomputer 90 extracts them. The third microcomputer 90 retrieves an ID code from the storage unit (not illustrated) in the third microcomputer 90 and compares the ID code retrieved from the storage unit with the ID code received by LF reception. If a match is obtained, the RF transmitting unit 85 transmits a response signal and the ID code to the RF receiving unit 65 in the vehicle-mounted wireless communication unit 200 by RF transmission. The RF receiving unit 65 receives by RF reception the response signal and ID code, which have transmitted from the RF transmitting unit 85 by RF transmission. The second microcomputer 70 retrieves the response signal and ID code. The second microcomputer 70 retrieves an ID code from the storage unit (not illustrated) in the second microcomputer 70 and compares the ID code retrieved from the storage unit with the ID code received by RF reception. If a match is obtained, the second microcomputer 70 transmits to the first microcomputer 10 a control signal indicating that wireless communication is in progress. Then, the first microcomputer 10 controls the sequence so that it proceeds in the arrow direction indicated by No and returns to START. In this state, it can be determined that the motorcycle is running normally.

If the motorcycle falls over while running, however, the rider may be thrown from the motorcycle beyond the wireless communication range of LF communication, as illustrated in Fig. 7. Therefore, ID comparison through LF communication cannot be carried out, so the RF receiving unit 65 cannot receive a response signal (communication is disabled) for a predetermined time (20 seconds, for example) or longer. In this case, the second microcomputer 70 in the vehicle-mounted wireless communication unit 200 determines that the rider carrying the mobile wireless communication unit 300 has moved beyond the LF communication range because, for example, the rider has fallen off the motorcycle, and then sends to the first microcomputer 10 a control signal indicating that communication is disabled. Then, the first microcomputer 10 controls the sequence so that it proceeds in the arrow direction indicated by Yes.

In step S-2, while measured values from the speedmeter 30 are changing within a reference range (for example, from a speed of 5 km/hour to a speed of 100 km/hour) for 60 seconds, the first microcomputer 10 determines that the motorcycle is running. The first microcomputer 10 then controls the sequence so that it proceeds in the arrow direction indicated by No and returns to START.

If measured values from the speedmeter 30 change abruptly from within the reference range to a predetermined value or lower (for example, speeds are about 0 km/hour) for 10 seconds or longer, the first microcomputer 10 determines that the motorcycle can no longer run due to an accident. Then, the first microcomputer 10 controls the sequence so that it proceeds in the arrow direction indicated by Yes. Even if measured values from the speedmeter 30 are within the reference range, when a speed drops abruptly, the first microcomputer 10 may determine that an accident has occurred.

In step S-3, while measured values from the leaning sensor 20 are changing for 60 seconds within a reference range (for example, from an angle of -30 degrees to an angle of +30 degrees), the first microcomputer 10 determines that the motorcycle is running. The first microcomputer 10 then controls the sequence so that it proceeds in the arrow direction indicated by No and returns to START.

If measured values from the leaning sensor 20 change abruptly from within the reference range to within a fall detection range (for example, a range from -80 degrees to +80 degrees to a range from -90 degrees to +90 degrees) for 10 seconds or longer, the first microcomputer 10 determines that the motorcycle has fallen over due to an accident. Then, the first microcomputer 10 controls the sequence so that it proceeds in the arrow direction indicated by Yes.

In step S-4, when a detection result from the ignition switch state detecting unit 43 indicates an off state, the first microcomputer 10 controls the sequence so that it proceeds in the arrow direction indicated by No.

If a detection result from the ignition switch state detecting unit 43 indicates an on state, the first microcomputer 10 controls the sequence so that it proceeds in the arrow direction indicated by Yes. When the detection result from the ignition switch state detecting unit 43 is the on state, the first microcomputer 10 determines that the engine of the motorcycle is operating, but the motorcycle cannot run due to an accident. Therefore, the first microcomputer 10 can accurately determine the occurrence of an accident by making determinations in steps S-1 to S-4 as conditions to detect an accident.

In step S-5, the first microcomputer 10 accurately determines, from the determination results in steps S-1 to S-4 that the motorcycle has had an accident. Then, the first microcomputer 10 controls the directional indicator driving unit 42 so as to drive the directional indicators 52 and raise an alarm for a predetermined time.

In step S-6, the first microcomputer 10 controls the directional indicator driving unit 42, headlight driving unit 40, and horn driving unit 41 so as to respectively drive the directional indicators 52, headlight 50, and horn 51 and raise alarms for a predetermined time.

Steps S-5 and S-6 are executed to reduce the likelihood of a secondary accident, such as a collision of a following vehicle or an oncoming vehicle with the motorcycle that has had the accident, and to notify people in the vicinity of the motorcycle accident and request rapid relief. The reason why the directional indicators 52 are driven first to call attention and the directional indicators 52, headlight 50, and horn 51 are then driven at least 5 seconds later is that if these three types of alarms are raised at the same time to alert the following vehicle or oncoming vehicle, the rider of the following vehicle or oncoming vehicle may be startled, which may impair the rider's safety. Thus, to assure safety for vehicle operation, alarms are raised in two stages.

When the detection result from the ignition switch state detecting unit 43 changes from the on state to the off state in step S-7, the first microcomputer 10 controls the headlight driving unit 40, horn driving unit 41, and directional indicator driving unit 42 so as to stop the driving of the headlight 50, horn 51, and directional indicators 52 and terminate the notification of the alarms.

After the elapse of a predetermined time from when the first microcomputer 10 started driving the headlight 50, horn 51, and directional indicators 52, the first microcomputer 10 also terminates the notification of the alarms by controlling the headlight driving unit 40, horn driving unit 41, and directional indicator driving unit 42 so as to automatically turn off the headlight 50, horn 51, and directional indicators 52 and terminate the notification of the alarms.

As described above, since the vehicle accident notification apparatus 100 in the first embodiment can accurately determine the occurrence of an accident by a motorcycle, it is possible to reduce the likelihood of a secondary accident, such as a collision of a following vehicle or an oncoming vehicle with the motorcycle that has had the accident by automatically raising alarms from the motorcycle that has had the accident.

So far, the vehicle accident notification apparatus 100 according to the first embodiment of the present invention has been specifically described, but the present invention is not limited to the above embodiment; the present invention can be embodied in various other forms without departing from the spirit and scope of the present invention. For example, the present invention can be embodied as variations described below and these variations are also included in the technical scope of the present invention.

### First variation

In the first embodiment, the vehicle accident notification apparatus 100 has used the leaning sensor 20 to detect an accident of a motorcycle. However, a seat sensor that detects whether a rider is on the seat may be used to detect an accident of the motorcycle. A pressure sensor or distortion sensor that detects a load applied to the seat, for example, may be used as the seat sensor.

### Second variation

In the first embodiment, the ID has been compared using LF communication. However, intra-body communication, in which communication is carried out through the rider's body, may be used. In this case, communication is carried out only while the rider is gripping the handlebars of the motorcycle.

## Claims

1. A vehicle accident notification apparatus (100) comprising:
a vehicle-mounted wireless communication unit (200) disposed on a motorcycle;
a control unit (10) that is configured to control a device mounted on the motorcycle; and a mobile wireless communication unit (300) carried by a rider; wherein
wireless communication is carried out between the vehicle-mounted wireless communication unit (200) and the mobile wireless communication unit (300), but if the vehicle-mounted wireless communication unit (200) and the mobile wireless communication unit (300) are separated from each other by a predetermined distance (wireless communication range) or longer, the wireless communication is disabled, and
if the wireless communication between the vehicle-mounted wireless communication unit (200) and the mobile wireless communication unit (300) is disabled for a predetermined time or longer and a measured value from a speedmeter (30) mounted on the motorcycle falls abruptly from within a reference range to or below a predetermined value for a predetermined time or longer, the control unit (10) is configured to determine that the motorcycle has had an accident and causes the motorcycle to automatically drive a notification function.

2. The vehicle accident notification apparatus according to Claim 1, wherein:
a measured value from a leaning sensor (20) that measures leaning of the motorcycle to a right side and a left side is input into the control unit (10); and
if the measured value from the leaning sensor (20) changes abruptly from within a reference range to within a fall detection range for a predetermined time or longer, the control unit (10) is configured to determine that the motorcycle has fallen over and to cause the motorcycle to automatically drive the notification function.

3. The vehicle accident notification apparatus according to Claim 1 or 2, wherein:
an ignition switch (53) is mounted on the motorcycle;
when the ignition switch (53) is turned on while the wireless communication between the vehicle-mounted wireless communication unit (200) and the mobile wireless communication unit (300) is established, the motorcycle is configured to start an engine, the motorcycle having a detecting unit (43) that detects whether the ignition switch (53) is turned on or off; and
if a detection result from the detecting unit (43) indicates an on state, the control unit (10) is configured to turn on the notification function, and if the detection result from the detecting unit (43) indicates an off state, the control unit (10) is configured to turn off the notification function.
